# EUROPÄISCHE PATENTANMELDUNG

(11) **EP 0 613 861 A1**
(43) Veröffentlichungstag der Anmeldung: **07.09.1994**
(21) Anmeldenummer: 94100855.9
(22) Anmeldetag: 21.01.1994
(51) Int. Cl.: C02F 1/28

(54) **Vorrichtung zum Mindestens teilweisen Entsalzen von Trinkwasser im Haushalt**

(30) Priorität: 16.02.1993 DE 4304536
(71) Anmelder: Brita Wasser-Filter-Systeme GmbH, D-65232 Taunusstein-Neuhof (DE)
(72) Erfinder: Belz, Rolf, D-65328 Hohenstein 1 Breithardt (DE); Conradt, Berthold, D-65205 Wiesbaden (DE)
(74) Vertreter: Weber, Dieter, Dr.

(57) **Zusammenfassung**

Die vorliegende Erfindung betrifft eine Vorrichtung zum mindestens teilweisen Entsalzen von Trinkwasser für die Nahrungsmittelzubereitung mit einem Auffangbehälter (1) für die Aufnahme von gefiltertem Trinkwasser und mit einem Aufsatz (2), welcher aus einem im wesentlichen trichterförmigen Oberteil besteht, das in seinem Boden (14) eine Aufnahmeöffnung (5) für eine Filterpatrone (6) aufweist. Um eine entsprechend einfache Vorrichtung bereitzustellen, mit deren Hilfe auch Laien ohne weiteres in der Lage sind, Trinkwasser für die Nahrungsmittelzubereitung sowohl in herkömmlicher Weise zu filtern als auch bei Bedarf, insbesondere für die Zubereitung von Babynahrung, in weitgehend entsalzter Form zu erhalten, wird erfindungsgemäß vorgeschlagen, daß ein zweiter Aufsatz (3) vorgesehen ist, welcher auf den ersten Aufsatz aufsetzbar oder zwischen den ersten Aufsatz (2) und den Auffangbehälter (1) einsetzbar ist und der ebenfalls ein trichterförmiges Teil mit einer Bodenöffnung (5') aufweist, in welchen eine zweite Filterpatrone (7) einsetzbar ist.

## Beschreibung

Die vorliegende Erfindung betrifft eine Vorrichtung zum mindestens teilweisen Entsalzen von Trinkwasser im Haushalt, insbesondere für die Nahrungsmittelzubereitung. Bei bekannten Filterverfahren dieser Art läßt man Wasser durch ein Filterbett fließen, das an mindestens ein Trägermaterial gebundenes Ionenaustauschermaterial enthält.

Eine entsprechende Vorrichtung (BRITA Wasserfilter) weist einen Auffangbehälter auf für gefiltertes Wasser sowie einen Behälteraufsatz mit einer Bodenöffnung, in welchen eine Filterpatrone einsetzbar ist. Der Behälteraufsatz ist mehr oder weniger trichterförmig ausgebildet und für die Aufnahme von zu filterndem Wasser vorgesehen, welches langsam durch die in den Boden des Aufsatzes eingesetzte Filterpatrone hindurch und in den darunter befindlichen Auffangbehälter hineinfließt.

Für den normalen Bedarf reicht es aus, die Wasserhärte, je nachdem wieviel Salzgehalt das Wasser aufweist, mehr oder weniger stark zu reduzieren. Die üblichen Filter enthalten, um dieses Ziel zu erreichen, im allgemeinen ein Gemisch aus schwachsaurem Kationenaustauscher in der Wasserstofform und zumeist einen gewissen Aktivkohleanteil, um das Wasser von Chlorungsrückständen zu befreien und es für die Verwendung im Haushalt zu verbessern. Daneben weisen derartige Filter in der Regel einen keimtötenden Stoff, Im allgemeinen Silber In dissoziierbarer Form auf, so daß gleichzeitig auch eine eventuell vorhandene Verkeimung des Wassers bei Benutzung und längerer Standzeit verhindert wird. Andere bekannte Ausführungsformen solcher Filter enthalten, neben dem oben erwähnten Gemisch von schwachsaurem Kationenaustauscher und Aktivkohle, als dritte Komponente einen stark basischen Anionenaustauscher in der Chloridform. Mit den bekannten Filtern lassen sich zwar Sulfat (SO₄) und Nitrat (NO₃) Anteile aus dem Wasser entfernen, es kann jedoch dazu kommen, daß dafür die Zahl der Chlorionen im Wasser erhöht wird. Insbesondere wenn das Filtermaterial allmählich seine Aufnahmekapazität erreicht hat, kann bei Verwendung üblicher starkbasischer Anionenaustauscher auch die Zahl der Nitrationen im gefilterten Wasser stark ansteigen. Bei einem Filter, in dem eine Filterpatrone mit vorgegebenem Volumeninhalt statt der zwei üblichen Filterkomponenten-nämlich schwachsaurem Kationenaustauscher und Aktivkohle - zusätzlich die dritte Komponente eines Anionenaustauschers enthält, sind die im Gemisch enthaltenen Volumina der einzelnen Komponenten stark verkleinert, so daß bei einer einerseits breiteren Anwendungsmöglichkeit und Wirkung eine andererseits stark verringerte Kapazität vorliegt, weil nämlich der starkbasische Anionenaustauscher eine auf sein Volumen bezogen deutlich geringere Kapazität hat als der schwachsaure Kationenaustauscher.

Die gewünschte Leistung eines solchen Filters wird nur zu Anfang seiner Laufzeit erreicht werden können. Danach wird die Leistung einer solchen Filterpatrone durch das frühzeitige Entstehen eines sogenannten Ionenschlupfes in all ihren Funktionen weitgehend geschwächt und es wird zu einer scheinbar vorzeitigen Erschöpfung des Filters kommen.

Insbesondere wenn das Filtermaterial allmählich seine Aufnahmekapazität erreicht hat, kann auch die Zahl der Nitrationen im gefilterten Wasser stark ansteigen. Somit kann bei Annäherung an die Aufnahmekapazität der Filterpatrone das gefilterte Wasser unter Umständen noch weniger für die Nahrungsmittelzubereitung geeignet sein als ungefiltertes Wasser. Dies gilt insbesondere für die Zubereitung von Babynahrung, da die üblichen Kindernahrungen wie Milchpulver und diverse Breisorten bereits die für eine gesunde Ernähtung erforderlichen Mineralstoffe in einem ausgewogenen Verhältnis aufweisen, das unter Umständen erheblich gestört werden kann, wenn das für die Nahrungszubereitung verwendete Wasser einen relativ hohen Anteil bestimmter Salze enthält.

Selbstverständlich ist es aus der Labortechnik und der großtechnischen Herstellung von entmineralisiertem Wasser bekannt, Trinkwasser auch wesentlich stärker zu entsalzen, jedoch geschieht dies mit Verfahren und Vorrichtungen, die nicht ohne weiteres für den täglichen Gebrauch im Haushalt übemommen werden können.

Die vorliegende Erfindung hat sich daher zum Ziel gesetzt, eine entsprechend einfache Vorrichtung bereitzustellen, mit deren Hilfe auch Laien ohne weiteres in der Lage sind, Trinkwasser für die Nahrungsmittelzubereitung sowohl in herkömmlicher Weise zu filtern als auch bei Bedarf, insbesondere für die Zubereitung von Babynahrung, in weitgehend entsalzter Form zu erhalten.

Diese Aufgabe wird dadurch gelöst, daß zusätzlich zu dem ersten Behälteraufsatz ein zweiter Aufsatz für die Aufnahme einer zweiten Filterpatrone vorgesehen und auf den ersten Aufsatz aufsetzbar oder zwischen dem ersten Aufsatz und dem Auffangbehälter einsetzbar ist.

Diese Ausgestaltung ermöglicht es nämlich, wahlweise in herkömmlicher Weise Trinkwasser zu filtern oder aber das Wasser nacheinander durch zwei Filterpatronen laufen zu lassen, die in den beiden Aufsätzen angeordnet sind. Dabei kann insbesondere ein Verfahren zur Anwendung kommen, das in der gleichzeitig für dieselbe Anmelderin eingereichten Patentanmeldung mit dem Titel "Verfahren zum wenigstens teilweisen Entsalzen von Trinkwasser" beschrieben ist. Danach wird nämlich das Wasser sowohl mit einem schwach sauren Kationenaustauscher in der Wasserstofform als auch vorher oder gleichzeitig mit einem stark basischen Anionenaustauscher in der Hydroxyl- oder Hydrogencarbonat-Form behandelt. Die betreffenden Patronen können wahlweise ein Mischbett aus dem stark basischen Anionenaustauscher und dem schwach sauren Kationenaustauscher aufweisen. In der bevorzugten Ausführungsform ist jedoch der stark basische Anionenaustauscher oberhalb des schwach sauren Kationenaustauschers vorgesehen, also z. B. in der oberen der beiden hintereinander geschalteten und in den beiden Aufsätzen aufgenommenen Patronen. Zwar hat der stark basische Anionenaustauscher eine vergleichsweise geringe Kapazität, jedoch wird dies im Falle der Verwendung einer Mischbettpatrone dadurch ausgeglichen, daß nunmehr zwei Patronen für die Filterung des Wassers zur Verfügung stehen, wobei außerdem das Verhältnis der lonenaustauschermengen in einer solchen Patrone jeweils so abgestimmt werden kann, daß die Erschöpfung des stark basischen Anionenaustauschers im allgemeinen nicht wesentlich vor der Erschöpfung des schwach sauren Kationenaustauschers auftritt. Bei der Verwendung einer herkömmlichen Patrone als Mischbettpatrone erscheint auch deshalb die Verwendung zweier hintereinander geschalteter Patronen als zweckmäßig, weil ansonsten in einer einzelnen Mischbettpatrone ein mehr oder weniger großer Schlupf auftreten kann, der nicht so leicht auftritt, wenn die Patrone nur mit einem einzigen Ionenaustauschermaterial gefüllt ist.

Es ist weiterhin möglich, beispielsweise die verschiedenen lonenaustauschermaterialien in ein und derselben Filterpatrone in zwei Schichten übereinanderlagern, wobei jedoch wegen des ansonsten kurzen Filterweges durch jede der Schichten eine Filterung durch zwei hintereinandergeschaltete Filterpatronen bevorzugt ist. Beide praktische Lösungen haben Vor- und Nachteile. Beim Anordnen beider Austauschermaterialien in derselben Filterpatrone, sei es durchmischt oder geschichtet übereinander, im letzteren Fall wahlweise auch durch eine wasserdurchlässige Zwischenwand voneinander getrennt, wird die Kapazität der Patrone schneller erschöpft sein, da das insgesamt in der Patrone vorhandene Volumen auch die Menge der Austauschermaterialien und auszutauschenden lonen entsprechend beschränkt. Dabei ist vor allem zu beachten, daß aufgrund der nahezu vollständigen Entsalzung des Wassers derartige Filter im Regelfall etwas schneller verbraucht sein dürften als herkömmliche Haushaltsfilter.

Durch den oben erwähnten, stark basischen Anionenaustauscher werdem dem Wasser vor allem Sulfat-, Nitrat- und Chloridionen entzogen, wobei vorzugsweise ein Austauschermaterial gewählt wird, das Nitrationen noch besser als Sulfationen bindet. Die vorgenannten lonen werden dann entweder durch Hydroxyl- oder Hydrogencarbonationen ersetzt, wobei letzteres zunächst einmal eine Zunahme der Carbonathärte des Wassers, also ein Umsalzen bewirkt. Der schwach saure Kationenaustauscher, mit dem das Wasser jedoch gleichzeitig oder anschließend in Betührung gebracht wird, entfernt aus dem Wasser die Kationen, so daß nunmehr die Carbonathärte vollständig entfernt wird und lediglich CO₂ aus dem Wasser entweicht. Da das Wasser wegen des zuvor erfolgten Anionenaustauschs lediglich Carbonate enthielt, ist es anschließend nahezu vollständig entsalzen.

Vorteile gegenüber dem eingangs erwähnten Ein-Patronen-System, das mit den drei Filterkomponenten: schwachsaurer Kationenaustauscher in der Wasserstofform, stark baischer Anionenaustauscher in der Chloridform und Aktivkohle befüllt ist, ergeben sich sogar bei der Verwendung des starkbasischen Anionenaustauschers in Chloridform als Einzelkomponente in der ersten Filterpatrone des Doppelfilterpatronensystems, während in der zweiten Patrone das übliche Gemisch aus schwachsaurem Kationenaustauscher und Aktivkohle vorliegt.

Die hier vorgesehene technische Ausgestaltung des Filteraufbaues erlaubt eine wesentlich höhere Filtrationsschärfe, als sie bei dem Einpatronensystem mit allen drei Filterkomponenten möglich wäre.

Dies resultiert in einem geringeren Schlupf und einer sehr viel besseren Ausnutzung der einzelnen Kapazitäten der Filterkomponenten und damit einer Prolongation der gewünschten Filterfunktionen bis kurz vor Erreichen der maximalen Aufnahmekapazität der Filtermaterialien.

Sofern keine Mischbett- oder Schichtbettpatronen verwendet werden, ist in einer bevorzugten Ausführungsform der Erfindung jeweils die obere der beiden verwendeten Patronen ausschließlich mit dem stark basischen Anionenaustauscher gefüllt, während sich in der unteren Patrone ausschließlich schwach saurer Kationenaustauscher befindet. In diesem Fall ist es wichtig, daß die richtige Reihenfolge der Filterung eingehalten wird, also zuerst der Kontakt mit dem stark basischen Anlonenaustauscher und damit die Umsalzung erfolgt und anschließend die vollständige Enthärtung und damit vollständige Entsaizung des Wassers erfolgt.

Zusätzlich wird durch die technische Ausgestaltung des erfindungsgemäßen Zwei-Filterpatronen-Sysstems eine Belüftung des zu filtrierenden Wassers nach der ersten Filterpatrone und vor Eintritt in die zweite Filterpatrone erzielt. Durch diese Belüftung des im allgemeinen nur tröpfelnd aus der ersten Filterpatrone austretenden Wassers wird eine zumindest teilweise Entfernung von im Wasser unter Umständen vorhandenen leicht flüchtigen Stoffen erreicht, die ansonsten vollständig durch Aktivkohle entfernt werden (müssen).

Die erfindungsgemäße Vorrichtung trägt dem Bedürfnis nach einer weitgehenden, besseren Entsalzung durch besondere Ausgestaltungsformen Rechnung. Besonders bevorzugt ist deshalb Ausführungsform der Erfindung, bei weicher die Bodenöffnungen der beiden Auffangbehälter und/oder gegebenenfalls zusätzliche Halterungen für die in der Öffnung aufzunehmende Filterpatrone so gestaltet und die Filterpatronen entsprechend angepaßt sind, daß jeweils nur ein Typ von Filterpatrone in die Aufnahmeöffnung des unteren Aufsatzes paßt, während ein anderer Typ von Filterpatrone nur in den oberen Aufsatz paßt, die Patronen für den oberen bzw. unteren Aufsatz also nicht austauschbar sind. Damit kann man sicherstellen, daß die gewünschte Reihenfolge der Filterung bzw. Entsalzung eingehalten wird, indem zunächst die Anionen und im zweiten Schritt die Kationen ausgetauscht werden.

So kann beispielsweise der zweite Aufsatz, der auf den bereits vorhandenen ersten Aufsatz aufgesetzt wird, so ausgestaltet sein, daß eine herkömmliche Patrone bzw. eine den stark basischen Anionenaustauscher enthaltende Patrone nicht in den unteren Aufsatz eingesetzt sein kann, wenn der obere Aufsatz mit einer Patrone aufgesetzt wird. Dies kann man entweder dadurch erreichen, daß die Bodenöffnungen der beiden Aufsätze und/oder gegebenenfalls zusätzliche Halterungen für die in der Öffnung aufzunehmende Filterpatrone so gestaltet und die Filterpatronen entsprechend angepaßt sind, daß jeweils nur ein Typ von Filterpatrone in die Aufnahmeöffnung des unteren Aufsatzes paßt, während ein anderer Typ von Filterpatrone nur in den oberen Aufsatz paßt, so daß die Patronen für den oberen bzw. unteren Aufsatz nicht austauschbar sind.

Bei einer anderen Ausgestaltung der Erfindung kann dies auch dadurch erreicht werden, daß die Höhe des unteren Aufsatzes so gewählt und der Boden des oberen Aufsatzes so angeordnet wird, daß die im oberen Aufsatz aufgenommene Patrone und/oder deren Halterung im Boden des oberen Aufsatzes erst dicht über dem Bodenniveau bzw. der Aufnahmeöffnung für die Patrone im unteren Aufsatz endet. Da herkömmliche Patronen im allgemeinen ein Stück weit Über das Bodenniveau des Aufsatzes bzw. über den oberen Rand der Aufnahmeöffnung im Boden des Aufsatzes hinausragen, würde ein entsprechend hochragender oberer Teil der Patrone im unteren Aufsatz ein passendes Aufsetzen des oberen Aufsatzes verhindern. Es muß also in den unteren Aufsatz ein anderer Typ von Patrone eingesetzt werden, der nicht oder fast nicht über den oberen Rand der Aufnahmeöffnung im unteren Aufsatz hinausragt. Erfindungsgemäß ist vorgesehen, daß hierzu der Deckel einer herkömmlichen Patrone, der im allgemeinen abgestuft pyramidenförmig nach oben ragt, umgedreht wird und mit der Spitze zum Patroneninneren hin das obere Ende der Patrone verschließt. Damit ragt eine solche, in den unteren Aufsatz eingesetzte Patrone nicht mehr über den Rand der Aufnahmeöffnung für die Patrone hinaus und verhindert nicht das Aufsetzen des oberen Aufsatzes mit der in ihn eingesetzten Patrone. Zwar wird durch eine solche Ausgestaltung das in der unteren Patrone verfügbare Volumen für lonenaustauschermaterial verkleinert, jedoch hat der dort vorgesehene schwach saure Kationenaustauscher eine deutlich größere Aufnahmekapazität als der stark basische Anionenaustauscher in der oberen Patrone, so daß hierdurch eine bessere Anpassung der Mengenverhältnisse erfolgt und die Erschöpfung des stark basischen Anionenaustauschers in der oberen Patrone nicht wesentlich früher eintritt als die Erschöpfung des schwach sauren Kationenaustauschers in der unteren Patrone. Im übrigen wird der Kationenaustauscher stärker beansprucht als bei herkömmlichen Filtervorrichtungen im Haushalt, da sämtliche Salze in der Carbonatform vorliegen können, nachdem das Wasser den stark basischen Anionenaustauscher passiert hat. Bei einer solchen Ausgestaltung brauchen die Aufnahmeöffnungen und Halterungen für die Patrone ebenso wie auch die im wesentlichen zylindrischen Patronenwände nicht unterschiedlich gestaltet zu werden, da eine Verwechslung der unteren und oberen Patronen allein durch die Bauhöhe der Patronen und die entsprechend angepaßte Höhe der Aufsätze bzw. deren Boden verhindert wird.

In bevorzugten Ausgestaltungen der Erfindung ist vorgesehen, daß die oberen Ränder der beiden Aufsätze und, falls gewünscht und eventuell abgesehen von einem Ausgießbereich, auch der obere Rand des Auffangbehälters jeweils Im wesentlichen identisch gestaltet sind, d.h. den gleichen Durchmesser und auch ein gleiches oder ähnliches Randprofil aufweisen, so daß ein und derselbe Deckel wahlweise auf beide Aufsätze und gegebenenfalls auch auf den Auffangbehälter unmittelbar aufsetzbar ist. In diesem Zusammenhang ist es selbstverständlich zweckmäßig, wenn mindestens der obere Aufsatz eine zylindrische Außenwand hat weil sich dann automatisch am oberen und unteren Rand des oberen Aufsatzes der jeweils gleiche Durchmeser ergibt. Dabei kann man auch den unteren Rand jedes der beiden Aufsätze so gestalten, daß er sicher und unverschlebbar auf dem jeweils darunterliegenden Rand des Auffangbehälters bzw. des unteren Aufsatzes aufliegt.

Erfindungsgemäß ist eine Ausgestaltung bevorzugt, bei welcher an den Übergängen zwischen Auffangbehälter und Aufsatz und zwischen den beiden Aufsätzen keine Durchmessersprünge auftreten, d.h. die betreffenden Teile jeweils glatt und im wesentlichen zylindrisch ineinander übergehen. Dies erleichtert vor allem die Reinhaltung und Pflege des Gerätes und kann beispielsweise durch ein abgestuftes Randprofil leicht verwirklicht werden.

Zusätzlich kann man durch miteinander in Eingriff tretende Teile am unteren Rand des oberen Aufsatzes und am oberen Rand des unteren Aufsatzes dafür sorgen, daß die beiden Aufsätze nicht vertauscht werden können. Dies kann außerdem noch durch eine entsprechende Farbgestaltung, graphische Gestaltung und/oder Markierung unterstützt werden.

Bei einer entsprechenden Ausgestaltung der Patronen mit einer einerseits sehr flachen und andererseits etwas höher bauenden Oberseite kann man im übrigen auch auf alle weiteren Maßnahmen zur Sicherstellung der Reihenfolge verzichten, d.h. auch der untere und obere Einsatz können ausgetauscht werden, solange nur die Patronen in der richtigen Reihenfolge in den betreffenden Aufsätzen sitzen. Dies erleichtert und vereinfacht die Herstellung der Vorrichtung, da dann identische Aufsätze hergestellt werden können.

Es versteht sich, daß auch eine herkömmliche Patrone in den betreffenden Aufsatz, vorzugsweise mindestens in den unteren Aufsatz, einsetzbar ist, so daß also wahlweise auch das Trinkwasser In der bisher gewohnten Weise mit einem geringeren Entsalzungsgrad gefiltert werden kann. Der Verbraucher kann sich gegebenenfalls zunächst nur ein normales Filtergerät beschaffen und später einen zweiten Aufsatz hinzukaufen, falls die stärkere Entsalzung benötigt wird. Umgekehrt ist es auch möglich, von einem zunächst beschafften Doppelfilter lediglich einen der beiden Aufsätze fortzulassen bzw. zu entfernen, um den übrigen Teil als normalen Haushaltswasserfilter weiterzuverwenden.

Weitere Vorteile, Merkmale und Anwendungsmöglichkeiten der vorliegenden Erfindung ergeben sich aus der folgenden Beschreibung bevorzugter Ausführungsformen und der dazugehörigen Figuren.

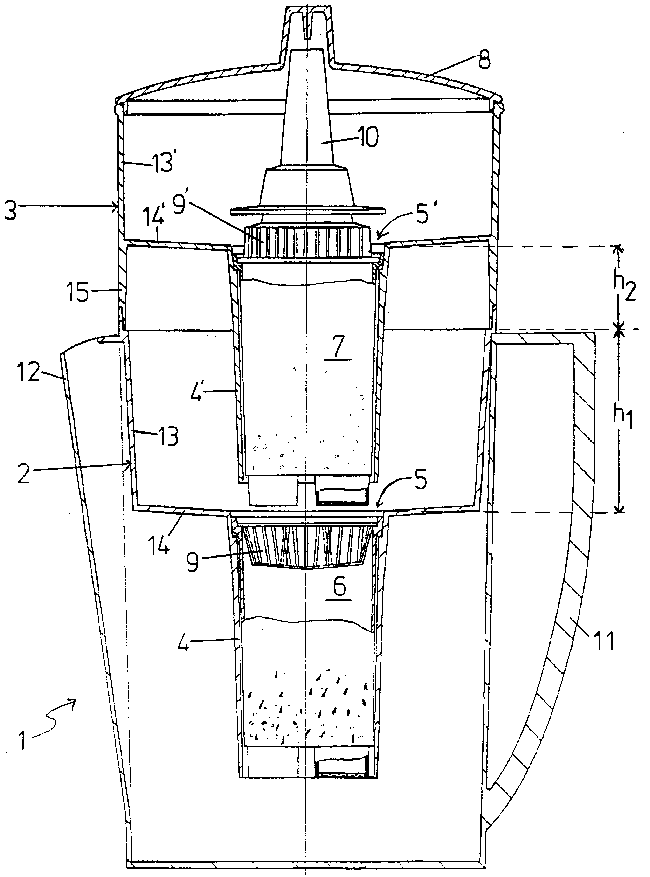

Die einzige Figur zeigt eine erfindungsgemäße Vorrichtung mit eingesetzten Patronen im Längsschnitt.

In der Figur erkennt man einen Auffangbehälter 1 für gefiltertes Wasser, der einen Handgriff 11 und eine Ausgußtülle 12 aufweist. Auf den oberen Rand des Behälters 1 ist ein Aufsatz 2 mit einem mehr oder weniger trichterförmigen Oberteil, das aus einer leicht konischen und nahezu zylindrischen Wand 13 und einem relativ flach zu einer Aufnahmeöffnung 5 hin geneigten Boden 14 besteht, aufgesetzt. Um die Aufnahmeöffnung 5 herum erstreckt sich von der Unterseite des Bodens aus nach unten ein schwach konischer, nahezu zylindrischer Ansatz 4, In welchen eine Patrone 6 passend einsetzbar ist. Die Patrone 6, der Rand der Aufnahmeöffnung 5 und der Ansatz 4 sind so gestaltet, daß die Patrone mit gutem Sitz und dicht darin aufgenommen ist, so daß das Wasser aus dem oberen Teil des Aufsatzes 2 ausschließlich durch die Patrone selbst hindurchfließt, um in den Behälter 1 zu gelangen.

Auf dem Aufsatz 2 befindet sich ein weiterer Aufsatz 3, der weitgehend ähnlich aufgebaut ist wie der Aufsatz 2. Insbesondere weist auch der Aufsatz 3 ein mehr oder weniger trichterförmiges bzw. als Trichter dienendes oberes Teil auf, das aus einer zylindrischen Wand 13' und einem zu einer Bodenöffnung 5' hin schwach geneigten Boden 14' besteht. Auch um den Rand der Bodenöffnung 5' die zur Aufnahme einer Patrone 7 dient, erstreckt sich nach unten ein leicht konischer Ansatz 4', in welchem die Patrone 7 mit gutem Sitz und mindestens an ihrem oberen Rand abgedichtet aufgenommen ist. Ein Unterschied zu dem Aufsatz 2 besteht darin, daß die Wand 13' des Trichterteiles des Aufsatzes 3 im wesentlichen zylindrisch ausgebildet ist, während die Wand 13 des Aufsatzes 2 leicht konisch ausgebildet ist, weil sie in den Behälter 1 eingesetzt ist und lediglich mit Ihrem abgestuften oberen Rand auf dem Rand des Behälters 1 aufliegt. Außerdem erstreckt sich ein ebenfalls zylindrischer Wandteil 15 in Fortsetzung der zylindrischen Wand 13' vom Boden 14' des oberen Aufsatzes 3 weiter nach unten, und der obere Aufsatz 3 ist dementsprechend nur mit dem unteren Rand der verlängerten Wand 15 auf den oberen Rand des unteren Aufsatzes 2 aufgesetzt. Der obere Rand des Aufsatzes 2 und der untere Rand des Aufsatzes 3 bzw. der verlängerten Wand 15 des Aufsatzes 3 sind dabei abgestuft so gestaltet, daß sie an Ihrer Außenseiteund auch innen bündig ineinander übergehen. Die zylindrische Wandveriängerung 15 an der Unterseite des Aufsatzes 3 dient in erster Linie dazu, oberhalb des Bodens 14 und der in die Aufnahmeöffnung 5 eingesetzten Patrone 6 des Aufsatzes 2 genügend Platz für die sich vom Boden 14' des oberen Aufsatzes nach unten erstreckende Patrone 7 und auch für den die Patrone 7 aufnehmenden Ansatz 4' bereitzustellen. Die lichte Höhe h₁ des Trichterteiles des unteren Aufsatzes 2 würde nämlich hierfür nicht ausreichen. Die lichte Höhe h₂ der zylindrischen Wand 15 ist aber so bemessen, daß der gesamte lichte Abstand h₁ + h₂ vom oberen Rand der unteren Bodenöffnung 5 bis zum unteren Rand des oberen Bodens 14' gerade ausreicht, um den Ansatz 4' und die Patrone 7 in dem dadurch gebildeten Raum aufzunehmen, wenn der Aufsatz 3 auf den Aufsatz 2 passend aufgesetzt ist. Man erkennt jedoch, daß das untere Ende der Patrone 7 sehr dicht über dem Rand der Bodenöffnung 5 des unteren Aufsatzes endet, so daß eine Patrone, die nennenswert über diesen Rand der Bodenöffnung 5 nach oben hervorstehen würde, das passende Aufsetzen des Aufsatzes 3 auf den Rand des unteren Aufsatzes 2 oder aber das passende Einsetzen der Patrone 7 in die Aufnahmeöffnung 5' bzw. den Ansatz 4' verhindern würde. Dies gilt insbesondere, wenn man beispielsweise die Patronen 6 und 7 vertauschen würde. Auf diese Weise wird sichergestellt, daß das in den Aufnahmetrichter des Aufsatzes 3 einzugießende Wasser immer zuerst die Patrone 7 und anschließend die Patrone 6 durchfließt. Auch die beiden Aufsätze 2 und 3 können nicht vertauscht werden, da der Aufsatz 2 mit seiner leicht konischen Wand 13 in den Aufnahmetrichter des oberen Aufsatzes 3 hineinrutschen würde und außerdem auch die lichte Höhe der Wand 13' des oberen Aufsatzes nicht ausreichen würde, um in dem oberen Trichterteil eine der Patronen 6 oder 7 aufzunehmen wenn der Aufsatz 2 noch auf den Aufsatz 3 aufgwesetzt werden sollte.

Wahlweise kann am Übergang der zylindrischen Wand 15 zu dee Wand 13 des unteren Aufsatzes 2 eine Sicherung oder eine Art Bajonettverschluß vorgesehen werden, damit für den Normalbetrieb die beiden Aufsätze 2 und 3 immer als Einheit zusammenbleiben, so daß nach Abnahme des Deckels 8 das zu filternde Wasser immer nur in den oberen Trichter des Aufsatzes 3 eingegossen wird.

Die Patrone 7 weist einen nach oben vorspringenden Siebdeckel 9' auf, der außerdem noch einen Griffaufsatz 10, der unter anderem auch als Entlüftungsrohr dient und der auch eine Markierung aufweist, um den Zeitpunkt des Einsetzens der Patrone durch entsprechendes Einstellen des Griffaufsatzes 10 ablesen zu können.

Die untere Patrone 6 weist ebenfalls einen Siebdeckel 9 auf, der dem Siebdeckel 9' weitgehend ähnlich ist und auch mit diesem identisch sein kann, jedoch genau umgekehrt auf den oberen Rand der Patrone auf- bzw. In die Patrone 6 eingesetzt Ist. Dadurch ist sichergestellt, daß die Patrone 6 nicht Über den Rand der Bodenöffnung 5 hinausragt, wenn sie passend in den Ansatz 4 bzw. In die Bodenöffnung 5 eingesetzt worden Ist. Dabei kann es zweckmäßig sei, wenn der Siebdeckel 9 etwas abweichend von dem Siebdeckel 9' derart gestaltet wird, daß sich vom zentralen Bereich des Siebdeckels 9 aus noch ein Griffansatz nach oben und zur Patronenaußen-Seite hin erstreckt, so daß die Patrone an diesem Griffansatz erfaßt und aus dem Ansatz 4 bzw. der Ausnahmeöffnung 5 herausgezogen werden kann, wenn sie durch eine neue Patrone ersetzt werden soll. Auch dieser Griffansatz ist jedoch so bemessen, daß er nicht Über den Rand der Bodenöffnung 5 hinausragt.

Mit Ausnahme der Siebdeckel 9 und 9' bzw. 10 können die Patronen 6 und 7 eine identische äußere Form haben. Durch das Umdrehen des Siebdeckels 9 im Vergleich zum Slebdeckel 9' ist dann jedoch das Volumen der Patrone 6 etwas geringer als das Volumen der Patrone 7. Dies ist jedoch kein Nachteil, wenn man berücksichtigt, daß für die Patrone 7 eine Füllung mit einem stark basischen Anionenaustauscher vorgesehen ist, der im allgemeinen schneller erschöpft ist als der schwach saure Kationenaustauscher, der als Füllung für die Patrone 6 vorgesehen ist.

Wenn auch in der Zeichnung nicht exakt dargestellt, so sollte jedoch in der bevorzugten Ausführungsform der Erfindung der obere Rand des Aufsatzes 3 den gleichen Innendurchmesser haben wie der obere Rand des unteren Aufsatzes 2, so daß der Deckel 8 in gleicher Weise auch auf den unteren Aufsatz 2 passend aufgesetzt werden kann. Der Filter kann dann ebenso wie die bereits bekannten üblichen Haushaltsfilter mit einer Patrone und einem Aufsatz 2 verwendet werden. Dabei darf auch die Patrone 6 verwendet werden, die einen schwach sauren Kationenaustauscher enthält und damit zumindest eine Enthärtung des Trinkwassers bewirkt, wenn auch andere Salze wie Chloride, Nitrate und Sulfate in dem Wasser verbleiben. Ansonsten kann jedoch die Patrone 6 auch durch die üblichen, bereits seit langem im Handel befindlichen Filterpatronen ersetzt werden.

Der obere Rand des unteren Aufsatzes 2 und der damit in Eingriff tretende untere Rand des oberen Aufsatzes 3 sind zwar einerseits so gestaltet, daß sie ineinander eingreifen, unverrückbar aufeinandersitzen und außen bündig miteinander abschließen, andererseits sind jedoch in der bevorzugten Ausführungsform der Erfindung in diesem Übergangsbereich auch Entlüftungsöffnungen vorgesehen, d.h. Aussparungen oder Vertiefungen in dem Übergangsbereich, durch welche Luft entweichen kann, wenn das Wasser aus dem oberen Aufsatz durch den Filter 7 in den unteren Aufsatz 2 hineinfließt und dabei die Luft aus diesem Zwischenraum verdrängt.

Die erfindungsgemäße Vorrichtung kann damit im Haushalt sowohl als normale Filtervorrichtung mit einer einzelnen Patrone verwendet werden und kann auch zum Zwecke der Vollentsalzung mit dem zweiten Aufsatz 3 und zwei Filterpatronen betrieben werden, die eine für die weitgehende Entsalzung vorgesehene, spezielle Füllung enthalten.

## Patentansprüche

1. Vorrichtung zum mindestens teilweisen Entsalzen von Trinkwasser für die Nahrungsmittelzubereitung mit einem Auffangbehälter (1) für die Aufnahme von gefiltertem Trinkwasser und mit einem Aufsatz (2), welcher aus einem im wesentlichen trichterförmigen Oberteil besteht, das in seinem Boden (14) eine Aufnahmeöffnung (5) für eine Filterpatrone (6) aufweist, **dadurch gekennzeichnet,** daß ein zweiter Aufsatz (3) vorgesehen ist, welcher auf den ersten Aufsatz aufsetzbar oder zwischen den ersten Aufsatz (2) und den Auffangbehälter (1) einsetzbar ist und der ebenfalls ein trichterförmiges Teil mit einer Bodenöffnung (5') aufweist, in welchen eine zweite Filterpatrone (7) einsetzbar ist.

2. Vorrichtung nach Anspruch 1, dadurch gekennzeichnet, daß der obere Einsatz (3) eine sich vom Boden (14') seines Trichterteiles im wesentlichen vertikal nach unten erstreckende, zylindrische Wand (15) aufweist, deren unterer Rand passend auf den oberen Rand des ersten Aufsatzes (2) aufsetzbar ist.

3. Vorrichtung nach Anspruch 2, dadurch gekennzeichnet, daß die lichte Höhe (h₂) der zylindrischen Wand (15) und die lichte Höhe (h₁) des Trichterteiles des unteren Aufsatzes (2) so bemessen sind, daß ihre Summe mindestens so groß und vorzugsweise geringfügig größer ist als der Abschnitt einer Patrone (7), der sich von dem unteren Rand des Bodens (14') des trichterförmigen Teils des zweiten Aufsatzes (3) aus gemessen nach unten erstreckt.

4. Vorrichtung nach Anspruch 1 bis 3, dadurch gekennzeichnet, daß der untere Aufsatz und der obere Aufsatz so bemessen sind, daß mindestens in den oberen Aufsatz eine Filterpatrone handelsüblicher Form dicht einsetzbar ist.

5. Vorrichtung nach Anspruch 1 bis 4, dadurch gekennzeichnet, daß die Aufnahmeöffnungen und/oder an den Aufsätzen angebrachte Halterungen für die Fikerpatronen bei dem unteren und oberen Aufsatz jeweils unterschiedlich gestaltet sind, so daß den Aufnahmeöffnungen bzw. Halterungen angepaßte Patronen in die Aufnahmeöffnung jeweils nur eines der beiden Aufsätze einsetzbar ist.

6. Vorrichtung nach einem der Ansprüche 1 bis 5, dadurch gekennzeichnet, daß der untere Aufsatz und die in ihn einzusetzende Patrone so bemessen sind, daß die Oberseite der Patrone nicht oder nur geringfügig über den oberen Rand der Bodenöffnung des unteren Aufsatzes hinausragt.

7. Vorrichtung nach Anspruch 6, dadurch gekennzeichnet, daß die Oberseite der Filterpatrone nicht mehr als 10 mm, vorzugsweise weniger als 5 mm, über den oberen Rand der Bodenöffnung des unteren Aufsatzes hinausragt.

8. Vorrichtung nach einem der Ansprüche 3 bis 7, dadurch gekennzeichnet, daß die Außenwände und der obere Rand des Aufnahmebehälters, die Außenwand und der untere und obere Rand des unteren Aufsatzes sowie die Außenwand und der untere Rand des oberen Aufsatzes so gestaltet sind, daß die drei Teile passend aufeinandersetzbar sind, ohne daß an den Übergängen zwischen den Teilen Durchmessersprünge auftreten.

9. Vorrichtung nach einem der Ansprüche 1 bis 8, dadurch gekennzeichnet, daß mindestens die Wand des oberen Aufsatzes zylindrisch ist und der obere Rand des oberen Aufsatzes in gleicher Weise gestaltet ist wie der obere Rand des unteren Aufsatzes, so daß auf jeden der beiden Aufsätze derselbe Deckel aufsetzbar ist.

10. Vorrichtung nach einem der Ansprüche 1 bis 9, dadurch gekennzeichnet, daß die Wand des unteren Aufsatzes zylindrisch ist und daß der obere Rand des unteren Aufsatzes weitgehend gleich gestaltet ist wie der obere Rand des Auffangbehälters, gegebenenfalls mit Ausnahme des Ausgießbereiches des Auffangbehälters, der Art, daß derselbe Deckel auf den Behälter wie auch auf den unteren Aufsatz aufsetzbar ist.

11. Vorrichtung nach einem der Ansprüche 1 bis 10, dadurch gekennzeichnet, daß zwischen dem oberen Rand des unteren Aufsatzes (2) und dem unteren Rand des oberen Aufsatzes (3) Belüftungsöffnungen vorgesehen sind.

12. Vorrichtung nach einem der Ansprüche 1 bis 11, dadurch gekennzeichnet, daß der obere Aufsatz mit einer Patrone versehen ist, die einen starkbasischen Anionenaustauscher in der Chloridform enthält, der vorzugsweise nitratselektiv filtert, und daß in dem unteren Aufsatz (2) eine Patrone vorgesehen ist, die einen schwachsauren Kationenaustauscher sowie Aktivkohle enthält.
